(19) Europäisches Patentamt
European Patent Office
Office européen des brevets

(11) EP 4 757 042 A2

(12) **EUROPEAN PATENT APPLICATION**

(43) Date of publication:
**10.06.2026 Bulletin 2026/24**

(21) Application number: **25215762.3**

(22) Date of filing: **14.11.2025**

(51) International Patent Classification (IPC):
***H01M 50/42*** *(2021.01)* ***H01M 10/052*** *(2010.01)*
***H01M 50/443*** *(2021.01)* ***H01M 50/446*** *(2021.01)*
***H01M 50/449*** *(2021.01)* ***H01M 50/46*** *(2021.01)*

(52) Cooperative Patent Classification (CPC):
**H01M 50/449; H01M 10/052; H01M 50/42; H01M 50/443; H01M 50/446; H01M 50/46**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.11.2024 KR 20240163675**

(71) Applicant: **SAMSUNG SDI CO., LTD.**
**Yongin-si, Gyeonggi-do 17084 (KR)**

(72) Inventors:
- **KIM, Hye Mi**
  **Gyeonggi-do 16678 (KR)**
- **LEE, Jung Seong**
  **Gyeonggi-do 16678 (KR)**
- **CHOI, Hyeon Seon**
  **Gyeonggi-do 16678 (KR)**

(74) Representative: **Michalski Hüttermann & Partner mbB**
**Kaistraße 16A**
**40221 Düsseldorf (DE)**

# (54) SEPARATOR FOR RECHARGEABLE LITHIUM BATTERY AND RECHARGEABLE LITHIUM BATTERY INCLUDING THE SAME

(57) The present disclosure relates to a separator for a rechargeable lithium battery, and a rechargeable lithium battery including the separator. The separator for a rechargeable lithium battery includes a porous substrate and a coating layer located on at least one surface of the porous substrate, and the coating layer includes a crosslinked product of polyvinyl alcohol and polyacrylamide, and a filler.

EP 4 757 042 A2

## Description

CROSS-REFERENCE TO RELATED APPLICATION

The present application claims priority to Korean Patent Application No.10-2024-0163675, filed on November 16, 2024 in the Korean Intellectual Property Office, the entire disclosure of which is incorporated herein by reference.

BACKGROUND

### 1. Field of the Disclosure

The present disclosure relates to a separator for a rechargeable lithium battery, and a rechargeable lithium battery including the separator.

### 2. Discussion of Related Art

With increasing use of electronic devices using batteries such as, e.g., mobile phones, notebook computers, electric vehicles, and the like, the demand for secondary batteries having high energy density and high capacity is increasing. Therefore, improving the performance of rechargeable lithium batteries may be advantageous.

A rechargeable lithium battery typically includes a positive electrode and a negative electrode that contain an active material capable of the intercalation and deintercalation of lithium ions, and produces electrical energy by oxidation and reduction reactions when the lithium ions are intercalated into and deintercalated from the positive electrode and the negative electrode.

A rechargeable lithium battery may further include a separator between the positive and negative electrodes. The separator may have low membrane resistance and high heat resistance, resulting in low thermal shrinkage.

SUMMARY

One example embodiment includes a separator for a rechargeable lithium battery having a low binder content in a coating layer, a low thermal shrinkage rate, and low membrane resistance.

One example embodiment includes a separator for a rechargeable lithium battery.

The separator for a rechargeable lithium battery includes a porous substrate and a coating layer located on at least one surface of the porous substrate, and the coating layer includes a crosslinked product of polyvinyl alcohol and polyacrylamide, and a filler.

Another example embodiment includes a rechargeable lithium battery.

The rechargeable lithium battery includes a positive electrode, a negative electrode, and the above-described separator located between the positive electrode and the negative electrode.

A separator for a rechargeable lithium battery according to one example embodiment exhibits low membrane resistance and a low thermal shrinkage rate, thereby improving the capacity, safety, and lifespan of the battery.

BRIEF DESCRIPTION OF THE DRAWINGS

The above and other objects, features and advantages of the present disclosure are more apparent to those of ordinary skill in the art by describing example embodiments thereof in detail with reference to the accompanying drawings, in which:

FIG. 1 is a cross-sectional view showing a separator for a rechargeable lithium battery according to one example embodiment;

FIG. 2 is a cross-sectional view showing a separator for a rechargeable lithium battery according to one example embodiment;

FIG. 3 to FIG. 6 are cross-sectional views schematically showing rechargeable lithium batteries according to example embodiment; and

FIG. 7 shows the results of FT-IR spectra measurement of a separator and a binder solution film, wherein the results of measuring the FT-IR spectrum of a coating layer in the separator of Example 1 are marked in thin solid line and the results of measuring the FT-IR spectrum of a coating layer in the separator of Comparative Example 1 are marked in

thin dotted line, and the results of measuring the FT-IR spectrum by forming a film of a binder solution used in Example 1 are indicated in thick solid line and the results of measuring the FT-IR spectrum by forming a film of a binder solution used in Comparative Example 1 are indicated in thick dotted line.

In FIG. 7, an X-axis is frequency (units: $cm^{-1}$), and a Y-axis is absorbance (units: none).

## DETAILED DESCRIPTION

Hereinafter, example embodiments of the present disclosure are described in detail below. However, the example embodiments are presented as examples, and the present disclosure is not limited thereto, and the present disclosure is only defined by the scope of the appended claims.

Unless otherwise stated herein, when a part such as a layer, a membrane, an area, a plate, and the like, is described as being disposed "on" another part, it includes not only a case where the part is "directly on" another part, but also a case where there are other parts therebetween.

Unless otherwise stated herein, the singular may also include the plural. In addition, unless otherwise stated, the term "A or B" may mean "including A, including B, or including A and B."

In the present specification, "a combination thereof" may mean a mixture, stack, composite, copolymer, alloy, blend, or reaction product of constituents.

Unless otherwise defined herein, "particle size D50" refers to a size of a particle with a cumulative volume of 50% by volume in a particle size distribution. The particle size D50 may be measured by methods known to those skilled in the art, and for example may be measured using a particle size analyzer, a transmission electron microscope photograph, or a scanning electron microscope photograph. As another method, the particle size D50 may be obtained by measuring the particle size using a measuring device using dynamic light scattering, performing data analysis to count the number of particles for each particle size range, and then calculating the particle size D50 therefrom. Alternatively, the particle size D50 may be measured using a laser diffraction method. When measuring the particle size by the laser diffraction method, for example, the particle size D50 based on 50% of a particle size distribution in the measuring device may be calculated by dispersing particles to be measured in a dispersion medium, then introducing the dispersion medium into a commercially available laser diffraction particle size measuring device (e.g., Microtrac's MT 3000), and radiating ultrasonic waves of about 28 kHz with an output of 60 W.

When the particle is spherical, the size may mean a diameter.

In the present specification, "(meth)acryl" refers to acryl and/or methacryl.

Hereinafter, unless otherwise defined, "substitution" means that hydrogen in a compound is substituted with a substituent such as or including at least one of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N+(CH_2)_nSO_3-$, n is a natural number from 1 to 10), a carboxybetaine group ($-RR'N+(CH_2)_nCOO-$, n is a natural number from 1 to 10) (here, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group ($-SO_3H$) or a salt thereof ($-SO_3M$, here, M denotes an organic or inorganic cation), a phosphate group ($-PO_3H_2$) or a salt thereof ($-PO_3MH$ or-$PO_3M_2$, here, M denotes an organic or inorganic cation), and a combination thereof.

Hereinafter, the C1 to C3 alkyl group may be or include a methyl group, an ethyl group, or a propyl group. The C1 to C10 alkylene group may be, for example, a C1 to C6 alkylene group, a C1 to C5 alkylene group, or a C1 to C3 alkylene group and may be, for example, a methylene group, an ethylene group, or a propylene group. The C3 to C20 cycloalkylene group may be, for example, a C3 to C10 cycloalkylene group, or a C5 to C10 cycloalkylene group, for example, a cyclohexylene group. The C6 to C20 arylene group may be, for example, a C6 to C10 arylene group, for example, a phenylene group. The C3 to C20 heterocyclic group may be, for example, a C3 to C10 heterocyclic group, for example, a pyridine group.

Hereinafter, "hetero" means including one or more heteroatoms such as or including at least one of N, O, S, Si, and P.

In addition, in the chemical formulas, the symbol * refers to a part that is connected to the same or a different atom, group, or structural unit. Unless specifically stated otherwise in a chemical formula shown herein, it may be assumed that hydrogen is bonded in the structure of the chemical formula.

Hereinafter, "alkali metal" refers to an element belonging to Group 1 of the periodic table, such as lithium, sodium, potassium, rubidium, cesium, or francium and may be present in a cationic or neutral state.

In the present specification, when describing a numerical range, "X to Y" means "X or more and Y or less (X≤ and

≤Y)."

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

A separator for a rechargeable lithium battery of the present disclosure exhibits low membrane resistance and a low thermal shrinkage rate, thereby improving the capacity, safety, and lifespan of the battery.

According to one example embodiment, the separator may have a membrane resistance of about 1Ω or less.

According to one example embodiment, the separator may have a thermal shrinkage rate of about 3% or less in each of a machine direction (MD) and a transverse direction (TD) after being left at 150 °C for 1 hour.

The separator for a rechargeable lithium battery according to one example embodiment includes a porous substrate and a coating layer located on at least one surface of the porous substrate, and the coating layer includes a crosslinked product of polyvinyl alcohol and polyacrylamide, and a filler.

The coating layer may be formed of or include a composition for a coating layer including at least one of polyvinyl alcohol, polyacrylamide, and a filler. According to one example embodiment, the coating layer may be formed by thermally crosslinking the composition for a coating layer at a temperature within a predetermined or desired range.

For example, the coating layer may be formed by aging the composition for a coating layer at a range of ≥ 50 °C to ≤ 100 °C, for example at 70 °C to 90 °C, and for example at 80 °C to 90 °C. The aging may be performed for a period in a range of ≥ 1 hour to ≤ 30 hours, for example, 10 hours to 30 hours.

According to one example embodiment, whether a crosslinked product of the polyvinyl alcohol and the polyacrylamide is formed in the coating layer can be confirmed through peak changes at frequencies of 1550 $cm^{-1}$ and 1745 $cm^{-1}$ in FT-IR. That is, before the thermal crosslinking reaction of the composition, there was no peak intensity at frequencies of 1550 $cm^{-1}$ and 1745 $cm^{-1}$, but after the thermal crosslinking reaction, there was peak intensity at frequencies of 1550 $cm^{-1}$ and 1745 $cm^{-1}$, and the peak intensity increased compared to before the thermal crosslinking reaction.

According to one example embodiment, when a binder solution entering the coating layer is formed into a film and an FT-IR spectrum is measured for this, a ratio of the peak intensity at a frequency of 1745 $cm^{-1}$ to the peak intensity at a reference frequency (e.g., frequency 1689 $cm^{-1}$) may be about 0.1 or more, for example, a range of ≥ 0.1 to ≤ 0.3. A ratio of peak intensity at a frequency of 1550 $cm^{-1}$ may be about 0.5 or more, for example, a range of ≥ 0.5 to ≤ 0.7. In the above range, it can be confirmed that crosslinking between the polyvinyl alcohol and the polyacrylamide has occurred, and low heat shrinkage and low membrane resistance can be provided.

Here, the FT-IR spectrum may be measured using a reflective measurement method for the coating layer in the separator.

Here, the peak intensity may be calculated as the percentage of the height or area of the corresponding peak with respect to the height or total area of the peak in the FT-IR results.

The coating layer includes the crosslinked product of polyvinyl alcohol and polyacrylamide. A separator having a coating layer including a crosslinked product of a heterogeneous binder instead of polyvinyl alcohol and polyacrylamide presented a challenge of not securing sufficient heat resistance at a high temperature. A separator having a coating layer including a crosslinked product of a heterogeneous binder instead of polyacrylamide and polyvinyl alcohol presented a challenge in that the binding force with the substrate was low and heat resistance at a high temperature was not secured.

According to one example embodiment, the crosslinked product may be or include a crosslinked product of a composition consisting solely of polyvinyl alcohol and polyacrylamide. That is, the crosslinked product may be or include a crosslinked product of a composition including a total of 100 wt% of polyvinyl alcohol and polyacrylamide.

According to one example embodiment, in the composition forming the crosslinked product, polyvinyl alcohol may be included in an amount in a range of ≥ 20 parts by weight to ≤ 50 parts by weight and polyacrylamide may be included in an amount of 50 parts by weight to 80 parts by weight, based on a total of 100 parts by weight of polyvinyl alcohol and polyacrylamide. In the above range, the effect of lowering the thermal shrinkage rate and membrane resistance may be desired or improved. For example, polyvinyl alcohol may be included in an amount in a range of 20,21,22,23,24,25,26,27,28,29,30,31,32,33,34,35,36,37,38,39,40,41,42,43,44,45,46,47,48,49,50 parts by weight, of ≥ 25 parts by weight to ≤ 30 parts by weight and polyacrylamide may be included in an amount in a range of 50,51,52,53,54,55,56,57,58,59,60,61,62,63,64,65,66,67,68,69,70,71,72,73,74,75,76,77,78,79,80 parts by weight, of ≥ 70 parts by weight to ≤ 75 parts by weight, based on a total of 100 parts by weight of polyvinyl alcohol and polyacrylamide.

The coating layer may significantly reduce the thermal shrinkage rate and membrane resistance of the separator compared to a separator having a coating layer including only polyvinyl alcohol and polyacrylamide without crosslinking between the polyvinyl alcohol and the polyacrylamide. This may be due to the fact that the crosslinked product of polyvinyl alcohol and polyacrylamide is located in the space between the fillers and lowers the shrinkage of the filler and the entire coating layer, and lowers membrane resistance by lowering the content of an organic component contained within the coating layer, but the present disclosure is not limited thereto.

The crosslinked product of polyvinyl alcohol and polyacrylamide in the coating layer may be included in an

amount in a range of ≥ 1 wt% to ≤ 10 wt%, for example, about 1, 2, 3, 4, 5, 6, 7, 8, 9, 10 wt%, 3 wt% to 5 wt%. In the above range, the thermal shrinkage rate and membrane resistance of the coating layer may be reduced without affecting the effect by the filler.

The polyvinyl alcohol may include a binder having a unit of the following Chemical Formula 1:

Chemical Equation 1: $*\text{-(-}CH_2\text{-}CH(OH)\text{-)-}*$ ;

The polyacrylamide may include a binder having a unit of the following Chemical Formula 2:

Chemical Equation 2: $*\text{-(-}CH_2\text{-}C(\text{-}(C{=}O)\text{-}NH_2)H\text{-)-}*$ ;

The filler may have a particle size D50 of about 0.5 μm or less. In the above range, it may be possible to reach the above thermal shrinkage rate. For example, the filler may have a particle size D50 of about 0.05, 0.1, 0.15, 0.2, 0.25, 0.3, 0.35, 0.4, 0.45, 0.5 μm, about 0.4 μm or less, for example, in a range of ≥ 0.2 μm to ≤ 0.35 μm.

The filler may be or include at least one of an inorganic filler, an organic filler, an organic-inorganic composite filler, or a combination thereof. The inorganic filler may be or include a ceramic material capable of improving heat resistance. The inorganic filler may include, for example, at least one of a metal oxide, a metalloid oxide, a metal fluoride, a metal hydroxide, or a combination thereof. The inorganic filler may include at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but is not limited thereto. The organic filler may include, but is not limited to, at least one of an acryl compound, an imide compound, an amide compound, or a combination thereof. The organic filler may have a core-shell structure, but is not limited thereto.

The filler may be spherical, platy, cubic, or amorphous. For example, the filler may have a plate shape.

The filler may be included in an appropriate amount relative to the crosslinked product. In one example embodiment, the crosslinked product:the filler mass ratio may range from about 1:10 to about 1:50, for example, 1:10, 1:15, 1:20, 1:25, 1:30, 1:35, 1:40, 1:45, 1:50, from 1:20 to 1:30. In the above range, the improvement effect in the thermal shrinkage rate can be remarkable.

The filler may be included in an amount in a range of ≥ 50 wt% to ≤ 99 wt%, 70 wt% to 99 wt%, 75 wt% to 99 wt%, 80 wt% to 99 wt%, 85 wt% to 99 wt%, 90 wt% to 99 wt%, or 95 wt% to 99 wt% of the total weight of the coating layer. When the filler is included within the above range, desired or improved heat resistance, durability, oxidation resistance, and stability may be exhibited.

The coating layer may further include a (meth)acrylic binder in addition to the crosslinked product of polyvinyl alcohol and polyacrylamide and the filler.

The (meth)acrylic binder may fix the filler onto the porous substrate, enable the coating layer to adhere to the porous substrate and the electrode, and contribute to improving the heat resistance, air permeability, and oxidation resistance of the separator. In addition, the (meth)acrylic binder can facilitate the movement of lithium ions, thereby lowering membrane resistance and improving ion conductivity, and can increase the adhesion of the coating layer to the porous substrate and the electrode and increase the dispersibility of the filler within the coating layer. In addition, the (meth) acrylic binder may further lower the membrane resistance of the coating layer including the filler.

The (meth)acrylic binder includes a first structural unit, a second structural unit, and a third structural unit as described below.

A sum of the content of the first structural unit, the second structural unit, and the third structural unit may be about 95 mol% or more, for example, in a range of ≥ 95 mol% to ≤ 100 mol%, for example, 100 mol%, based on 100 mol% of the (meth)acrylic binder. In the above range, the above-described separator effect may be readily implemented.

The first structural unit is derived from (meth)acrylic acid, (meth)acrylate, or a salt thereof, and may fix the filler onto the porous substrate while providing adhesion so that the coating layer may be attached to the porous substrate and the electrode, and may contribute to improving the heat resistance and air permeability of the separator. In addition, the first structural unit can improve the dispersibility of a coating slurry by having a carboxyl functional group (-C(=O)O-) within the structural unit.

The first structural unit may be represented by any one of the following Chemical Formulas 3 to 5:

Chemical Formula 3: Chemical Formula 4: Chemical Formula 5:

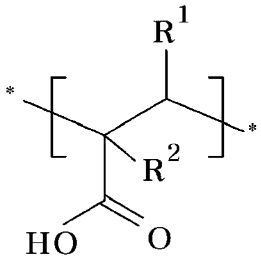

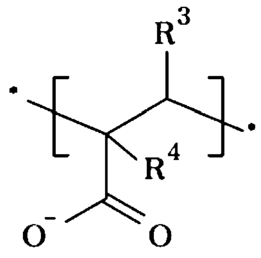

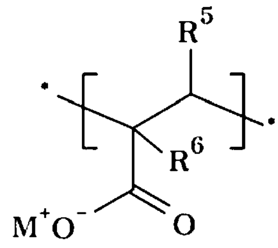

The first structural unit may be included in an amount in a range of ≥ 25 mol% to ≤ 65 mol%, for example 25,26,27,28,29,30,31,32,33,34,35,36,37,38,39,40,41,42,43,44,45,46,47,48,49,50,51,52,53,54,55, 56,57,58,59,60,61,62,63,64,65 mol%, 30 mol% to 65 mol%, 30 mol% to 60 mol%, or 40 mol% to 65 mol%, based on 100 mol% of the binder for a rechargeable lithium battery. When the first structural unit is included in the above range, the separator may exhibit low membrane resistance, desired or improved adhesion to the porous substrate and the electrode, and desired or improved heat resistance, air permeability, and oxidation resistance.

According to one example embodiment, the first structural unit may include the structural unit represented by Chemical Formula 4 and the structural unit represented by Chemical Formula 5, in which case the structural unit represented by Chemical Formula 4 and the structural unit represented by Chemical Formula 5 may be included in a molar ratio in a range of about 10:1 to about 1:2, 10:1 to 1:1, or 5:1 to 1:1.

According to another example embodiment, the first structural unit may include only the structural unit represented by Chemical Formula 4.

The second structural unit is derived from hydroxyalkyl (meth)acrylate and may fix the filler onto the porous substrate while providing adhesion so that the coating layer may be attached to the porous substrate and the electrode. In addition, the second structural unit can improve the dispersibility of a coating slurry by having a carboxyl functional group (-C(=O)O-) within the structural unit.

The second structural unit may be represented by the following Chemical Formula 6:

Chemical Equation 6:

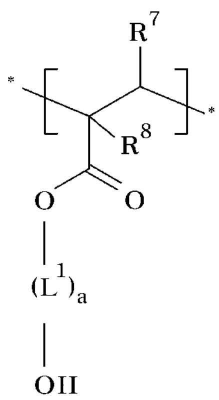

The second structural unit may be included in an amount in a range of ≥ 1 mol% to ≤ 20 mol%, 1,2,3,4,5,6,7,8,9,10,11,12,13,14,15,16,17,18,19,20 mol%, or 5 mol% to 15 mol% based on 100 mol% of the binder for a rechargeable lithium battery. In the above range, it may be possible to increase the adhesion of the coating layer to the porous substrate and the electrode.

The second structural unit may be or include, for example, a structural unit derived from hydroxyalkyl (meth) acrylate. Here, the alkyl may be or include a C1 to C20 alkyl, a C1 to C10 alkyl, or a C1 to C6 alkyl.

The hydroxyalkyl (meth)acrylate may include, for example, at least one or more of hydroxymethyl (meth)acrylate, 2-hydroxyethyl (meth)acrylate, 2-hydroxypropyl (meth)acrylate, 2-hydroxybutyl (meth)acrylate, 4-hydroxybutyl (meth) acrylate, and 6-hydroxyhexyl (meth)acrylate.

The third structural unit derived from the (meth)acrylamidosulfonic acid or a salt thereof may lower the membrane

resistance of the separator by increasing the possibility of lithium ion movement in the presence of the first structural unit and the second structural unit.

The third structural unit may enhance the heat resistance of the separator due to an increase in glass transition temperature by including a bulky functional group derived from (meth)acrylamidosulfonic acid or a salt thereof. In addition, when the third structural unit includes a functional group derived from a salt of (meth)acrylamidosulfonic acid, the metal (M) can move through the third structural unit by a sulfonic acid functional group substituted with the metal (M), thereby exhibiting an effect of lowering membrane resistance.

The third structural unit may be represented by at least one of the following Chemical Formula 7, Chemical Formula 8, Chemical Formula 9, or a combination thereof.

Chemical Formula 7:

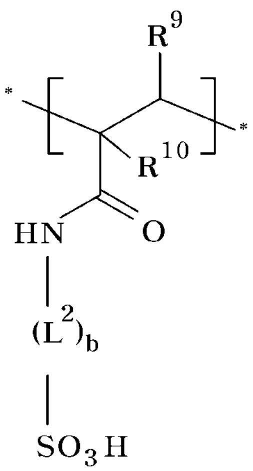

Chemical Formula 8:

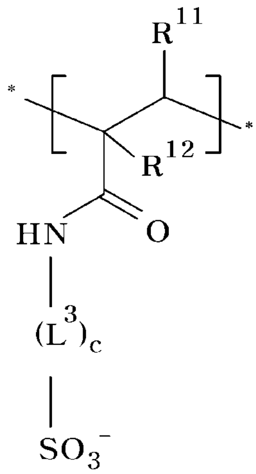

Chemical Formula 9:

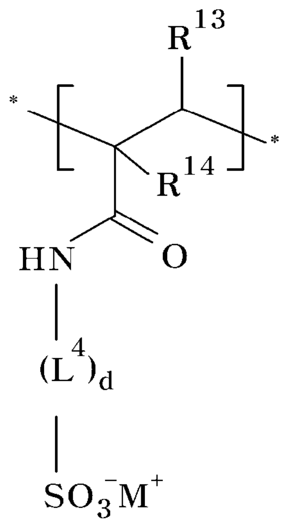

.

The third structural unit may include only one, or two or more, of the structural unit represented by Chemical Formula 7, the structural unit represented by Chemical Formula 8, and the structural unit represented by Chemical Formula 9. For example, the third structural unit may include only the structural unit represented by Chemical Formula 8, and as another example, the third structural unit may include the structural unit represented by Chemical Formula 8 and the structural unit represented by Chemical Formula 9.

The third structural unit may be or include, for example, a structural unit derived from (meth)acrylamidoalkane sulfonic acid or a salt thereof. Here, the alkane may be or include a C1 to C20 alkane, a C1 to C10 alkane, or a C1 to C6 alkane, and the alkyl may be or include a C1 to C20 alkyl, a C1 to C10 alkyl, or a C1 to C6 alkyl. The salt means a salt composed of or including the above-described sulfonic acid and an appropriate ion. The ion may be or include, for example, an alkali metal ion, in which case the salt may be or include a sulfonic acid alkali metal salt.

For example, the (meth)acrylamidoalkane sulfonic acid may be or include 2-(meth)acrylamido-2-methylpropane sulfonic acid.

The third structural unit may be included in an amount in a range of ≥ 20 mol% to ≤ 65 mol%, for example, 20,21,22,23,24,25,26,27,28,29,30,31,32,33,34,35,36,37,38,39,40,41,42,43,44,45,46,47,48,49,50, 51,52,53,54,55,56,57,58,59,60,61,62,63,64,65 mol%, 30 mol% to 60 mol% in the (meth)acrylic binder. When the third structural unit is included in the above range, the (meth)acrylic binder and a separator including the same may exhibit significantly low membrane resistance.

The description of Chemical Formulas 3 to 9 is as follows.

$R^1$ to $R^{14}$ may each independently be or include hydrogen or a C1 to C10 alkyl group. For example, $R^1$ to $R^7$ and $R^9$ to $R^{14}$ may each be or include hydrogen or a methyl group, and $R^8$ may be or include a methyl group.

$L^1$ to $L^4$ may each independently be or include a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, $L^1$ may be a methylene group or an ethylene group, and $L^2$ to $L^4$ may each independently *-$C(CH_3)_2$-$CH_2$-*.

a, b, c, and d may each be independently an integer in a range from 0 to 2. For example, a, b, c, and d may all be equal to 1.

M may be or include an alkali metal, and the alkali metal may be lithium, sodium, potassium, rubidium, or cesium.

For example, M may be lithium or sodium.

A representative example of the binder for a rechargeable lithium battery according to one example embodiment is as shown in the following Chemical Formula 10:

Chemical Equation 10:

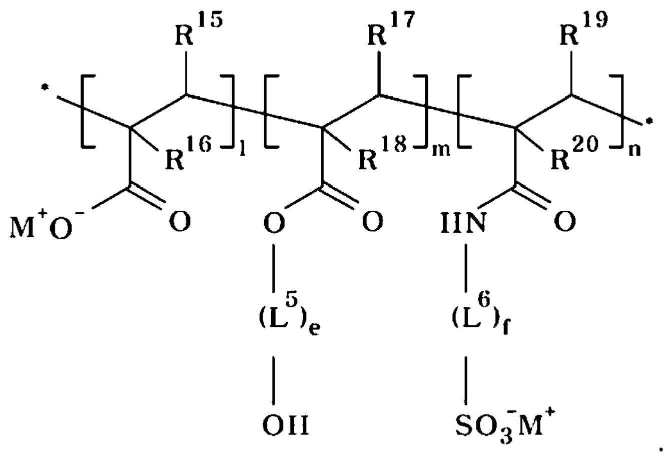

The description for Chemical Formula 10 is as follows.

$R^{15}$ to $R^{20}$ may each independently be or include hydrogen or a C1 to C10 alkyl group. For example, $R^{15}$ to $R^{17}$ and $R^{19}$ and $R^{20}$ may each be hydrogen or a methyl group; and $R^{18}$ may be a methyl group.

$L^5$ and $L^6$ may each independently be or include a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, $L^5$ may be a methylene group or an ethylene group, and $L^6$ may be $*\text{-}C(CH_3)_2\text{-}CH_2\text{-}*$.

M may be or include an alkali metal, and the alkali metal may be lithium, sodium, potassium, rubidium, or cesium. For example, M may be lithium or sodium.

e and f may each be independently an integer in a range from 0 to 2. For example, e and f may all be equal to 1.

l, m, and n may be molar ratios of each unit, and l+m+n=1. For example, $0.2 \le l \le 0.65$, $0.01 \le m \le 0.2$, and $0.2 \le n \le 0.65$, for example, $0.3 \le l \le 0.65$, $0.01 \le m \le 0.2$, and $0.2 \le n \le 0.65$; or $0.3 \le l \le 0.6$, $0.05 \le m \le 0.15$, and $0.3 \le n \le 0.6$.

The (meth)acrylic binder may include an alkali metal. The alkali metal may be present in the form of a cation, for example, lithium, sodium, potassium, rubidium, or cesium. For example, the alkali metal may be present in the form of a salt combined with the (meth)acrylic binder. The alkali metal may assist the synthesis of the (meth)acrylic binder in an aqueous solvent, improve the adhesion of the coating layer, and improve the heat resistance, air permeability, and oxidation resistance of the separator.

The alkali metal may be included in an amount in a range ≥ 1 wt% to ≤ 40 wt%, for example, 1 wt% to 30 wt%, 1 wt% to 20 wt%, or 10 wt% to 20 wt% of the alkali metal and the (meth)acrylic binder. For example, the (meth)acrylic binder and the alkali metal may be included in a weight ratio in a range of about 99:1 to about 60:40, a weight ratio of 99:1 to 70:30, for example, a weight ratio of 99:1 to 80:20, for example, a weight ratio of 90:10 to 80:20.

The alkali metal may be included in an amount in a range of ≥ 0.1 mol% to ≤ 1.0 mol% based on the total content of the alkali metal and the (meth)acrylic binder. When the alkali metal is included within the above range, the coating layer may have desired or improved adhesion, and the separator including the coating layer may exhibit desired or improved heat resistance, air permeability, and oxidation resistance.

The (meth)acrylic heat-resistant binder may have various forms, such as an alternating polymer in which the structural units are alternately distributed, a random polymer in which the structural units are randomly distributed, or a graft polymer in which some of the structural units are grafted.

An average molecular weight of the (meth)acrylic binder may be in a range of ≥ 100,000 g/mol to ≤ 1,000,000 g/mol, 100,000 g/mol to 500,000 g/mol, 100,000 g/mol to 150,000 g/mol, 130,000 g/mol to 200,000 g/mol, or 300,000 g/mol to 900,000 g/mol. When the average molecular weight of the (meth)acrylic binder satisfies the above range, the binder may exhibit desired or improved adhesion and low resistance. The average molecular weight may be a polystyrene-converted average molecular weight measured using gel permeation chromatography.

The (meth)acrylic binder may be prepared by a solution polymerization method.

According to one example embodiment, the (meth)acrylic binder may be included in the form of a film in the coating layer of the separator.

The (meth)acrylic binder in the coating layer may be included in an amount in a range of ≥ 1 wt% to ≤ 10 wt%. In the above range, the membrane resistance may be further reduced without increasing the thermal shrinkage rate of the coating layer. For example, the (meth)acrylic binder in the coating layer may be included in an amount in a range of 3 wt% to 5 wt%, or in a range of 3 wt% to 4 wt%. In the above range, the membrane resistance may be further reduced without increasing the thermal shrinkage rate of the coating layer.

In the coating layer, the crosslinked product of polyvinyl alcohol and polyacrylamide and the (meth)acrylic binder may be mixed.

The coating layer may have a total thickness in a range of ≥ 0.01 μm to ≤ 20 μm, and within the above range, the thickness may be in a range of 0.01 μm to 5 μm, 0.1 μm to 3 μm, or 0.1 μm to 1.5 μm.

A ratio of the thickness of the coating layer to the thickness of the porous substrate may range from ≥ 0.05 to ≤ 0.5, for example, from 0.05 to 0.4, from 0.05 to 0.3, or from 0.1 to 0.2. In the above range, the separator can exhibit desired or improved air permeability, heat resistance, and adhesion. Here, the term "thickness of the coating layer" means the thickness of one coating layer when the coating layer is formed on only one surface of the porous substrate, and means the total thickness of two coating layers when the coating layer is formed on both surfaces of the porous substrate.

**Porous substrate**

The porous substrate has a large number of pores, and may be or include a substrate typically used in electrochemical devices. The porous substrate may be or include, but is not limited to, a polymer film formed of or including one polymer such as or including at least one of polyolefins such as polyethylene and polypropylene, polyesters such as polyethylene terephthalate and polybutylene terephthalate, polyacetal, polyamide, polyimide, polycarbonate, polyetheretherketone, polyaryletherketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and polytetrafluoroethylene, or a copolymer or mixture of two or more thereof.

The porous substrate may be or include, for example, a polyolefin-based substrate including polyolefin, and the polyolefin-based substrate has a desired or improved shutdown function, and thus may contribute to improving the safety of the battery. The polyolefin-based substrate may be or include, for example, at least one of a polyethylene single layer film, a polypropylene single layer film, a polyethylene/polypropylene two-layer film, a polypropylene/polyethylene/polypropylene three-layer film, and a polyethylene/polypropylene/polyethylene three-layer film. In addition, the polyolefin-based resin may include a non-olefin resin in addition to an olefin resin, or may include a copolymer of olefin and non-olefin monomers.

The porous substrate may have a thickness in a range of ≥ 1 μm to ≤ 40 μm, for example, 1 μm to 30 μm, 1 μm to 20 μm, or 5 μm to 15 μm.

The separator for a rechargeable lithium battery according to one example embodiment may exhibit desired or improved air permeability, and may have, for example, an air permeability value of less than about 200 sec/100cc, for example, 190 sec/100cc or less, or 180 sec/100cc or less. That is, the separator may have a permeability value of less than about 40 sec/100cc·1 μm per unit thickness, for example, 30 sec/100cc·1 μm or less, or 25 sec/100cc·1 μm or less. Here, the term "air permeability" refers to the time (seconds) it takes for 100 cc of air to pass through the unit thickness of the separator. The air permeability per unit thickness may be obtained by measuring the air permeability for the total thickness of the separator, and dividing the measured air permeability by the total thickness. The air permeability may be obtained by measuring the time (seconds) it takes for 100 cc of air to pass through the separator using an air permeability measuring device (Asahi Seiko, EG01-55-1MR).

The separator for a rechargeable lithium battery according to one example embodiment may be manufactured by applying a composition for a coating layer on one side, or on both sides, of a porous substrate, and then aging the composition.

FIG. 1 and FIG. 2 are cross-sectional views showing separators for a rechargeable lithium battery according to one example embodiment.

Referring to FIG. 1, the separator for a rechargeable lithium battery includes a porous substrate 1 and coating layers 2 located on both sides of the porous substrate 1. Each of the coating layers 2 may include a filler 3 and a crosslinked product 4 of polyvinyl alcohol and polyacrylamide.

Referring to FIG. 2, the separator for a rechargeable lithium battery includes a porous substrate 1 and coating layers 2a located on each side of the porous substrate 1. Each of the coating layers 2a may include a filler 3, a crosslinked product 4 of polyvinyl alcohol and polyacrylamide, and a (meth)acrylic binder 5.

<u>Rechargeable lithium battery</u>

According to one example embodiment, the rechargeable lithium battery includes the separator for a rechargeable lithium battery, a positive electrode, and a negative electrode.

The separator for rechargeable lithium battery refers to the description above. The separator for rechargeable lithium battery may be positioned between the positive electrode and the negative electrode.

Positive electrode

A positive electrode for a rechargeable lithium battery may include a current collector, and a positive electrode active material layer on the current collector. The positive electrode active material layer may include a positive electrode active material, and may further include a binder and/or a conductive material.
For example, the positive electrode may further include an additive that can constitute a sacrificial positive electrode.

Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be used.
The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.
As an example, the following compounds represented by any one of the following Chemical Formulas may be used. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$($0.90 \leq a \leq 1.8$).
In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.
The positive electrode active material may be or include, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity, and can be applied to a high-capacity, high-density rechargeable lithium battery.
An amount of the positive electrode active material may be in a range of ≥ 90 wt% to ≤ 99.5 wt% based on 100 wt% of the positive electrode active material layer. Amounts of each of the binder and the conductive material may independently be in a range of ≥ 0.5 wt% to ≤ 5 wt%, respectively, based on 100 wt% of the positive electrode active material layer.
The binder attaches the positive electrode active material particles to each other, and also attaches the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.
The conductive material may impart conductivity (e.g., electrical conductivity) to the electrode. Any material that does not cause a chemical change (e.g., that does not cause an undesirable chemical change in the rechargeable lithium battery) and that conducts electrons can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in the form of a metal powder or a metal fiber; a conductive polymer such as a polyphenylene derivative; or a mixture thereof.
Al may be used as the current collector, but the current collector is not limited thereto.

Negative electrode

The negative electrode for a rechargeable lithium battery may include a current collector, and a negative

electrode active material layer on the current collector. The negative electrode active material layer may include a negative electrode active material, and may further include a binder and/or a conductive material (e.g., an electrically conductive material).

For example, the negative electrode active material layer may include ≥ 90 wt% to ≤ 99 wt% of the negative electrode active material, ≥ 0.5 wt% to ≤ 5 wt% of the binder, and ≥ 0 wt% to ≤ 5 wt% of the conductive material.

Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiOx$ ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

The binder may attach the negative electrode active material particles to each other, and may also attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause a chemical change (e.g., does not cause an undesirable chemical change in the rechargeable lithium battery) and that conducts electrons can be used in the battery. Non-limiting examples thereof may include a carbon-based material such as at least one of natural graphite, artificial graphite, carbon black, acetylene black, ketjen black, a carbon

fiber, a carbon nanofiber, and a carbon nanotube; a metal-based material including at least one of copper, nickel, aluminum, silver, and the like, in the form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

Electrolyte Solution

The electrolyte solution for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone, or in combination of two or more solvents.

In addition, when using a carbonate-based solvent, a cyclic carbonate and a chain carbonate may be mixed together, and the cyclic carbonate and the chain carbonate may be mixed in a volume ratio in a range of about 1:1 to about 1:9.

The lithium salt dissolved in the organic solvent supplies lithium ions in a battery, enables an operation of a rechargeable lithium battery, and improves transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers in a range of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on their shape.

FIG. 3 to FIG. 6 are schematic views illustrating a rechargeable lithium battery according to an example embodiment. FIG. 3 shows a cylindrical battery, FIG. 4 shows a prismatic battery, and FIG. 5 and FIG. 6 show pouch-type batteries. Referring to FIG. 3 to FIG. 6, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 3. In FIG. 4, the rechargeable lithium battery 100 may include a positive lead tab 11, a positive terminal 12 connected to the positive lead tab 11, a negative lead tab 21, and a negative terminal 22 connected to the negative lead tab 21. As shown in FIG. 5 and FIG. 6, the rechargeable lithium battery 100 may include an electrode tab 70 illustrated in FIG. 6, or for example, a positive electrode tab 71 and a negative electrode tab 72 illustrated in FIG. 5, the electrode tabs 70/71/72 forming an electric path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure are described below. However, the following are only examples of the present disclosure, and the present disclosure is not limited to the following examples.

**Preparation Example 1**

To a 3 L four-necked separable flask equipped with a stirrer, a thermometer, and a condenser, distilled water

(1249.72 g), a 20% lithium hydroxide aqueous solution (203.69 g, 1.05 equivalents based on the total amount of acrylic acid and 2-acrylamido-2-methylpropanesulfonic acid), acrylic acid (AA, 0.40 mol), 2-hydroxyethyl methacrylate (HEMA, 0.10 mol), 2-acrylamido-2-methylpropanesulfonic acid (AMPS, 0.5 mol), and ammonium persulfate (0.2 g, 0.001 mol) were added, and then an operation of reducing an internal pressure to 10 mmHg with a diaphragm pump and returning the internal pressure to normal pressure with nitrogen was repeated three times. The reaction was performed for 12 hours while controlling heating so that the temperature of a reaction solution was stabilized between 65 °C and 70 °C. After cooling to room temperature, about 10 mL of the reaction solution was taken and a non-volatile (NV) component content was measured, which was 9.8% (theoretical value: 10%). In addition, in the resulting poly(acrylic acid-co-2-hydroxyethyl methacrylate-co-2-acrylamido-2-methylpropanesulfonic acid) lithium salt, a molar ratio of a first structural unit derived from a lithium acrylic acid salt, a second structural unit derived from 2-hydroxyethyl methacrylate, and a third structural unit derived from 2-acrylamido-2-methylpropanesulfonic acid lithium salt was 40:10:50.

**Preparation Example 2**

In Preparation Example 1, the content of each monomer was changed to prepare poly(acrylic acid-co-2-hydroxyethyl methacrylate-co-2-acrylamido-2-methylpropanesulfonic acid) lithium salt. A molar ratio of a lithium acrylic acid salt, 2-hydroxyethyl methacrylate, and 2-acrylamido-2-methylpropanesulfonic acid lithium salt was 30:10:60. About 10 mL of a reaction solution (reaction product) was taken and a non-volatile component content was measured, which was 9.0 wt% (theoretical value: 10%).

**Example 1**

A product AQC containing polyvinyl alcohol (PVA) and a product HCM200S containing polyacrylamide (PAM) were mixed to prepare a mixture containing polyvinyl alcohol and polyacrylamide. The mixture included 25 parts by weight of polyvinyl alcohol and 75 parts by weight of polyacrylamide, based on a total of 100 parts by weight of polyvinyl alcohol and polyacrylamide.

Boehmite (particle size D50: 300 nm, plate shape, BG200 from Eston) as a filler was added to the mixture at a mass ratio (1:20) of the mixture:filler = 1 part by weight:20 parts by weight based on the solid content, and then input into a water solvent, milled and dispersed using a bead mill at 25 °C for 30 minutes to prepare a dispersion. Water was added to the dispersion so that the total solid content became 20 wt% to prepare a composition for forming a coating layer.

The composition for forming a coating layer was coated to a thickness of 1 μm on each of both sides of a polyethylene film (thickness: 5.5 μm, CZMZ, air permeability: 110 sec/100 cc, puncture strength: 360 kgf) as a porous substrate using a die coating method, and then aged in an oven at 80 °C for 16 hours to form a coating layer, thereby manufacturing a separator.

**Example 2**

A separator was manufactured in the same manner as in Example 1, except that the mixture and filler was mixed in a mass ratio of 1 part by weight:30 parts by weight (1:30).

**Example 3**

A separator was manufactured in the same manner as in Example 1, except that 30 parts by weight of polyvinyl alcohol and 70 parts by weight of polyacrylamide were included based on 100 parts by weight of the total of polyvinyl alcohol and polyacrylamide in the mixture in Example 1.

**Example 4**

A product AQC containing polyvinyl alcohol and a product HCM200S containing polyacrylamide were mixed to prepare a mixture containing polyvinyl alcohol and polyacrylamide. The mixture included 25 parts by weight of polyvinyl alcohol and 75 parts by weight of polyacrylamide, based on a total of 100 parts by weight of polyvinyl alcohol and polyacrylamide.

Boehmite (particle size D50: 300 nm, plate shape, BG200 from Eston) as a filler was mixed to the mixture at a mass ratio (1:20) of the mixture:filler = 1 part by weight:20 parts by weight based on the solid content. Boehmite (particle size D50: 300 nm, plate shape, BG200 from Eston) was mixed with the (meth)acrylic binder of Preparation Example 1 at a mass ratio (1:20) of the mixture:filler = 1 part by weight:20 parts by weight based on the solid content, and then input into a water solvent, milled and dispersed using a bead mill at 25 °C for 30 minutes to prepare a dispersion. Water was added to the dispersion so that the total solid content became 20 wt% to prepare a composition for forming a coating layer.

The composition for forming a coating layer was coated to a thickness of 1 μm on each of both sides of a polyethylene film (thickness: 5.5 μm, CZMZ, air permeability: 110 sec/100 cc, puncture strength: 360 kgf) as a porous substrate using a die coating method, and then aged in an oven at 80 °C for 16 hours to form a coating layer, thereby manufacturing a separator.

**Example 5**

A separator was manufactured in the same manner as in Example 4, except that the (meth)acrylic binder of Preparation Example 2 was used instead of the (meth)acrylic binder of Preparation Example 1 used in Example 4.

**Comparative Example 1**

A composition for a coating layer was formed using the same method as in Example 1.

The composition for forming a coating layer was coated to a thickness of 1 μm on each of both sides of a polyethylene film (thickness: 5.5 μm, CZMZ, air permeability: 110 sec/100 cc, puncture strength: 360 kgf) as a porous substrate using a die coating method, and then dried in an oven at 70 °C for 10 hours to form a coating layer, thereby manufacturing a separator. The coating layer does not include a crosslinked product of polyvinyl alcohol and polyacrylamide.

**Comparative Example 2**

A composition for a coating layer was prepared in the same manner as in Example 1, except that carboxymethyl cellulose (CMC) was used instead of polyacrylamide in Example 1.

The composition for forming a coating layer was coated to a thickness of 1 μm on each of both sides of a polyethylene film (thickness: 5.5 μm, CZMZ, air permeability: 110 sec/100 cc, puncture strength: 360 kgf) as a porous substrate using a die coating method, and then aged in an oven at 80 °C for 16 hours to form a coating layer, thereby manufacturing a separator.

**Comparative Example 3**

A composition for a coating layer was prepared in the same manner as in Example 1, except that polymethyl methacrylate (PMMA) was used instead of the polyacrylamide used in Example 1.

The composition for forming a coating layer was coated to a thickness of 1 μm on each of both sides of a polyethylene film (thickness: 5.5 μm, CZMZ, air permeability: 110 sec/100 cc, puncture strength: 360 kgf) as a porous substrate using a die coating method, and then aged in an oven at 80 °C for 16 hours to form a coating layer, thereby manufacturing a separator.

**Comparative Example 4**

A separator was manufactured in the same manner as in Comparative Example 1, except that a mass ratio of the mixture of polyvinyl alcohol and polyacrylamide:filler was changed to 1 part by weight:9 parts by weight (1:9). The coating layer does not include a crosslinked product of polyvinyl alcohol and polyacrylamide.

**Comparative Example 5**

A separator was manufactured in the same manner as in Example 1, except that only polyvinyl alcohol was used in Example 1.

**Comparative Example 6**

A separator was manufactured in the same manner as in Example 1, except that polyacrylamide, carboxymethyl cellulose, and polymethyl methacrylate were used in Example 1.

**Manufacture of battery**

Manufacture of negative electrode:

97 wt% of graphite particles with an average particle size of 25 μm as a negative electrode active material, 1.5

wt% of a styrene-butadiene rubber (SBR) binder, and 1.5 wt% of carboxymethyl cellulose (CMC) were mixed, and then the mixture was input into distilled water and stirred for 60 minutes using a mechanical stirrer to prepare a negative electrode active material slurry. The slurry was applied onto a 10 μm-thick copper current collector using a doctor blade, dried in a hot air dryer at 100 °C for 0.5 hour, dried again under vacuum at 120 °C for 4 hours, and then roll-pressed to manufacture a negative electrode.

Manufacture of positive electrode:

97 wt% of $LiCoO_2$ as a positive electrode active material, 1.5 wt% of carbon black powders as a conductive material, and 1.5 wt% of polyvinylidene fluoride (PVdF) were mixed, input into an N-methyl-2-pyrrolidone solvent, and stirred for 30 minutes using a mechanical stirrer to prepare a positive electrode active material slurry. The slurry was applied onto a 20 μm-thick aluminum current collector using a doctor blade, dried in a hot air dryer at 100 °C for 0.5 hour, dried again under vacuum at 120 °C for 4 hours, and then roll-pressed to manufacture a positive electrode.

Electrode assembly jelly roll:

Each separator obtained according to the examples and comparative examples was interposed between the positive electrode and the negative electrode manufactured above and then wound to prepare an electrode assembly jelly roll. The jelly roll was inserted into a pouch, an electrolyte was injected, and the pouch was vacuum-sealed. As the electrolyte, 1.3 M $LiPF_6$ dissolved in a mixed solvent of ethylene carbonate (EC), ethyl methyl carbonate (EMC), and diethyl carbonate (DEC) in a volume ratio of 3:5:2 was used.

The jelly roll inserted into the pouch was pressed at a temperature of 80 °C for 3 minutes while applying a pressure of 11.7 $kgf/cm^2$ to manufacture a rechargeable lithium battery.

**Thermal shrinkage rate (units: %) after leaving at 150 °C for 1 hour**

Each separator for lithium rechargeable batteries of the examples and comparative examples was cut into a size of 8 cm × 8 cm to prepare a sample. After drawing a 5 cm X 5 cm square on the surface of the sample, the sample was placed between paper or alumina powder, left in an oven at 150 °C for 1 hour, and then taken out, the dimensions of the sides of the drawn square were measured, and the shrinkage rate in each of the machine direction (MD) and transverse direction (TD) was calculated. The shrinkage rate is calculated according to Mathematical Formula 1 below.

Mathematical Formula 1:

$$\text{Shrinkage rate} = (L0 - L1) / L0 \times 100.$$

L0 is an initial length of the separator, and L1 is a length of the separator after being left at 150 °C for 1 hour.

**Membrane resistance (units: Ω)**

The membrane resistance was evaluated as electrochemical impedance spectroscopy (EIS) resistance. The separators manufactured in the examples and comparative examples were impregnated with an electrolyte of a mixed solvent of ethylene carbonate, propylene carbonate, ethyl propionate, and propyl propionate (volume ratio of 10/15/30/45 and total volume of 100) containing 1.3 M $LiPF_6$, and the resulting separators were used to manufacture coin cells and the resistance (Ω) was measured. The measurement environment was 20 °C, and the measurement was performed using the alternating current impedance method (measurement frequency of 100 kHz).

**Peak intensity change at frequency 1745 $cm^{-1}$ in FT-IR**

In the examples and comparative examples, a binder solution was produced in the same ratio as the ratio used in the manufacture of the separator, and then the film was formed and FT-IR spectra were measured using a reflective method.

Then, in the examples and comparative examples, the films were subjected to the same aging conditions as the separator manufacturing process, and then FT-IR spectra were measured using the same method as above.

The two results were compared to evaluate the change in peak intensity at frequencies 1550 $cm^{-1}$ and 1745 $cm^{-1}$.

Even when measuring the FT-IR spectrum of a finished separator product at the pre-aging stage during the separator manufacturing process, a change in the peak at a frequency of 1745 $cm^{-1}$ is confirmed, but the size of the peak

may be minimal because the binder does not occupy a large proportion in the finished separator product. At around 1550 $cm^{-1}$, a peak change due to the crosslinking reaction is observed.

The specific measurement method of FT-IR spectra was performed in the absorption mode in the range of 400 $cm^{-1}$ to 4000 $cm^{-1}$ using a Fourier transform infrared (ATR-FTIR) spectrometer (Nicolet iS50, Thermo Scientific) with an ATR crystal accessory.

Table 1:

| | | Examples | | | | | Comparative Examples | | | | | |
|---|---|---|---|---|---|---|---|---|---|---|---|---|
| | | 1 | 2 | 3 | 4 | 5 | 1 | 2 | 3 | 4 | 5 | 6 |
| **Binder** | PVA | 25 | 25 | 30 | 25 | 25 | 25 | 25 | 25 | 25 | 100 | 0 |
| | PAM | 75 | 75 | 70 | 75 | 75 | 75 | 0 | 0 | 75 | 0 | 100 |
| | CMC | 0 | 0 | 0 | 0 | 0 | 0 | 75 | 0 | 0 | 0 | 100 |
| | PMMA | 0 | 0 | 0 | 0 | 0 | 0 | 0 | 75 | 0 | 0 | 100 |
| Mass ratio 1 | | 1:20 | 1:30 | 1:20 | 1:20 | 1:20 | 1:20 | 1:20 | 1:20 | 1:9 | 1:20 | 1:20 |
| Mass ratio 2 | | - | - | - | 1:20 | 1:20 | - | - | - | - | - | - |
| Aging or not | | ○ | ○ | ○ | ○ | ○ | X | ○ | ○ | X | ○ | ○ |
| Thermal shrinkage rate | MD | 2 | 2.2 | 2.3 | 2 | 1.8 | 8.5 | 8.6 | 8.5 | 3.1 | 8.6 | 8.5 |
| | TD | 0 | 0.1 | 0.3 | 0 | 0 | 4.6 | 4.7 | 4.7 | 0.5 | 4.8 | 4.7 |
| Membrane resistance | | 0.83 | 0.65 | 0.82 | 0.79 | 0.79 | 0.88 | 1.1 | 0.88 | 1.65 | 0.88 | 0.88 |
| FT-IR | Intensity changes at 1550 and 1745 $cm^{-1}$ | ○ | ○ | ○ | ○ | ○ | X | X | X | X | X | X |
| *Mass ratio 1: Mass ratio of mixture of polyvinyl alcohol and polyacrylamide:filler<br>*Mass ratio 2: Mass ratio of (meth)acrylic binder of Preparation Example 1 or 2:filler | | | | | | | | | | | | |

As shown in Table 1 above, the separators of the examples can simultaneously or contemporaneously secure low membrane resistance and a low thermal shrinkage rate, and improve the capacity, safety, and lifespan of the battery.

Although the example embodiments of the present disclosure have been described above, the present disclosure is not limited thereto, and various modifications may be made within the scope of the claims, the detailed description of the disclosure, and the attached drawings, which also fall within the scope of the present disclosure.

## Claims

**1.** A separator (30) for a rechargeable lithium battery (100), the separator (30) comprising:

a porous substrate (1); and
a coating layer (2) located on at least one surface of the porous substrate (1),
wherein the coating layer (2) includes a crosslinked product (4) of polyvinyl alcohol and polyacrylamide, and a filler (3).

**2.** The separator (30) of claim 1, wherein the crosslinked product (4) is a crosslinked product (4) of a composition including a total of 100 wt% of polyvinyl alcohol and polyacrylamide.

**3.** The separator (30) of claim 1 or 2, wherein:

the polyvinyl alcohol is included in an amount in a range of ≥ 20 parts by weight to ≤ 50 parts by weight based on a total of 100 parts by weight of the polyvinyl alcohol and the polyacrylamide; and
the polyacrylamide is included in an amount in a range of ≥ 50 parts by weight to about ≤ parts by weight based on a

total of 100 parts by weight of the polyvinyl alcohol and the polyacrylamide.

4. The separator (30) according to any one of claims 1 to 3, wherein the crosslinked product (4) of the polyvinyl alcohol and the polyacrylamide is included in an amount in a range of ≥ 1 wt% to ≤ 10 wt% in the coating layer (2).

5. The separator (30) according to any one of claims 1 to 4, wherein the crosslinked product (4):the filler (3) mass ratio ranges from about 1:10 to about 1:50.

6. The separator (30) according to any one of claims 1 to 5, wherein the filler (3) has a particle size D50 of about 0.5 μm or less.

7. The separator (30) according to any one of claims 1 to 6, wherein the coating layer (2) comprises a composition for a coating layer (2) including the polyvinyl alcohol, the polyacrylamide, and the filler (3).

8. The separator (30) according to any one of claims 1 to 7, wherein the coating layer (2) further comprises a (meth) acrylic binder (5) including:

a first structural unit derived from (meth)acrylic acid, (meth)acrylate, or a salt thereof;
a second structural unit derived from hydroxyalkyl (meth)acrylate; and
a third structural unit derived from (meth)acrylamidosulfonic acid or a salt thereof.

9. The separator (30) according to any one of claims 1 to 8, , wherein the coating layer (2) further comprises a (meth) acrylic binder (5) including:

a first structural unit derived from (meth)acrylic acid, (meth)acrylate, or a salt thereof;
a second structural unit derived from hydroxyalkyl (meth)acrylate; and
a third structural unit derived from (meth)acrylamidosulfonic acid or a salt thereof; and wherein the (meth)acrylic binder (5):the filler (3) mass ratio ranges from about 1:10 to about 1:50.

10. The separator (30) of claims 8 or 9, wherein the first structural unit is represented by at least one of the following Chemical Formula 3, Chemical Formula 4, Chemical Formula 5, and a combination thereof:

Chemical Formula 3:

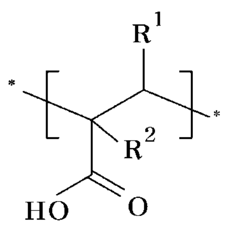

Chemical Formula 4:

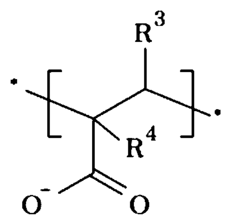

Chemical Formula 5:

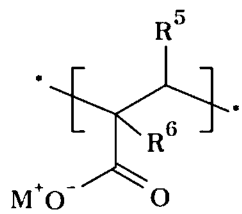

;

the second structural unit is represented by the following Chemical Formula 6:

Chemical Equation 6:

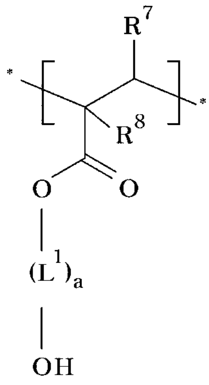

;

the third structural unit is represented by at least one of the following Chemical Formula 7, Chemical Formula 8, Chemical Formula 9, and a combination thereof:

Chemical Formula 7:

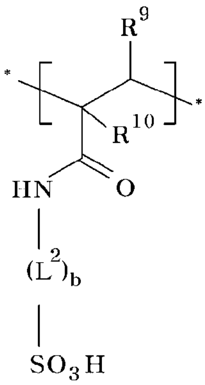

Chemical Formula 8:

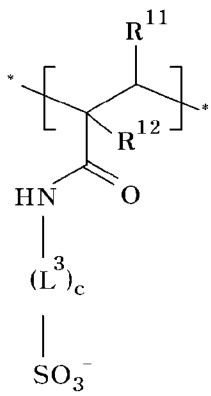

Chemical Formula 9:

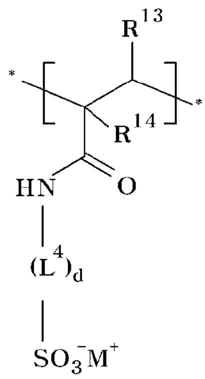

;

in Chemical Formulas 3 to 9,
$R^1$ to $R^{14}$ each independently comprises hydrogen or a C1 to C10 alkyl group,
$L^1$ to $L^4$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
a, b, c, and d are each independently an integer in a range from 0 to 2, and
M comprises an alkali metal.

**11.** The separator (30) according to any one of claim 8 to 10, wherein:

the first structural unit is included in an amount in a range of ≥ 25 mol% to ≤ 65 mol%;
the second structural unit is included in an amount of ≥ 1 mol% to ≤ 20 mol%; and
the third structural unit is included in an amount of ≥ 20 mol% to ≤ 65 mol%, based on 100 mol% of the (meth)acrylic binder (5).

**12.** The separator (30) according to any one of claims 8 to 11, wherein the (meth)acrylic binder (5) is represented by the following Chemical Formula 10:

Chemical Equation 10:

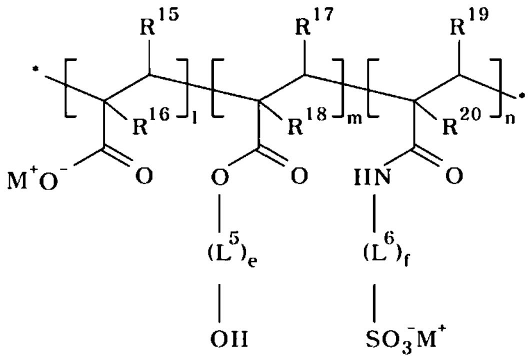

;

in Chemical Formula 10,

$R^{15}$ to $R^{20}$ each independently comprises hydrogen or a C1 to C10 alkyl group,
$L^5$ and $L^6$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
M comprises an alkali metal,
e and f are each independently an integer in a range from 0 to 2, and
1, m, and n are molar ratios of each unit, and l+m+n=1.

**13.** The separator (30) according to any one of claims 8 to 12, wherein the (meth)acrylic binder (5) in the coating layer (2) may be included in an amount in a range of ≥ 1 wt% to ≤ 10 wt%.

**14.** The separator (30) according to any one of claims 1 to 13, wherein the crosslinked product (4) of the polyvinyl alcohol and the polyacrylamide and the (meth)acrylic binder (5) are mixed and included.

**15.** A rechargeable lithium battery (100) comprising:

a positive electrode (10);
a negative electrode (20); and
the separator (30) for a rechargeable lithium battery (100) according to any one of claims 1 to 14 positioned between the positive electrode (10) and the negative electrode (20).

FIG 1.

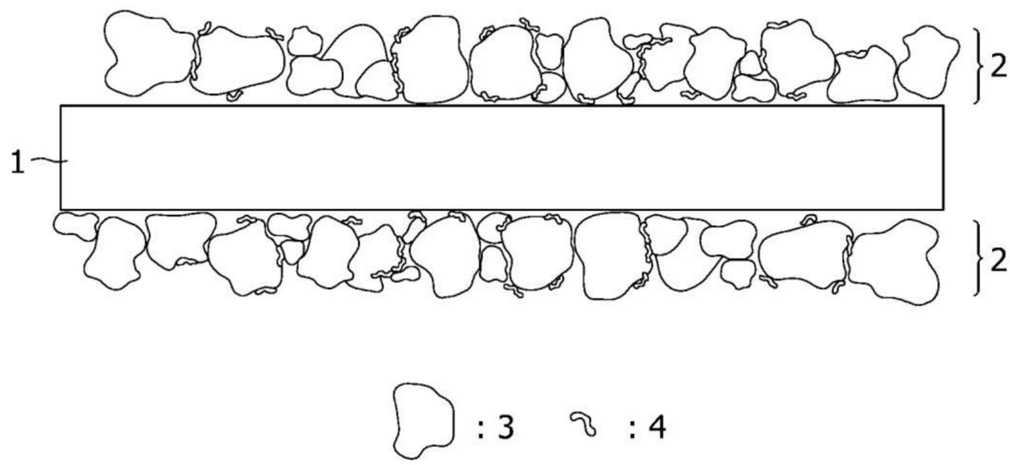

FIG 2.

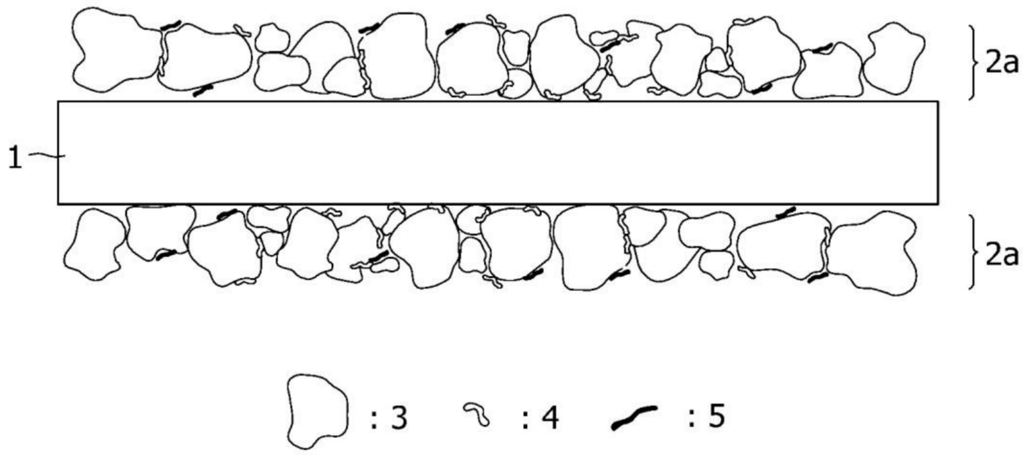

FIG 3.

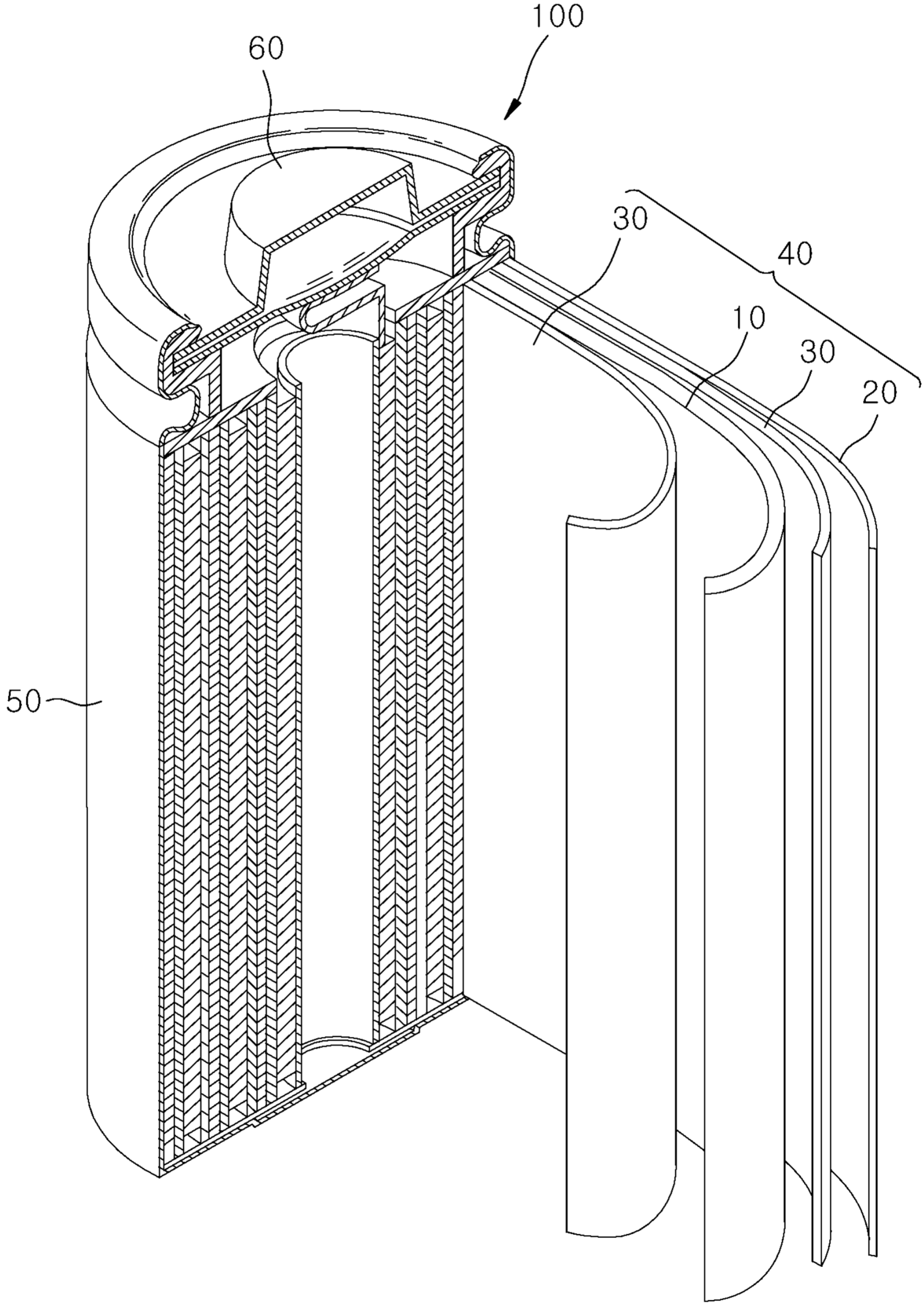

FIG 4.

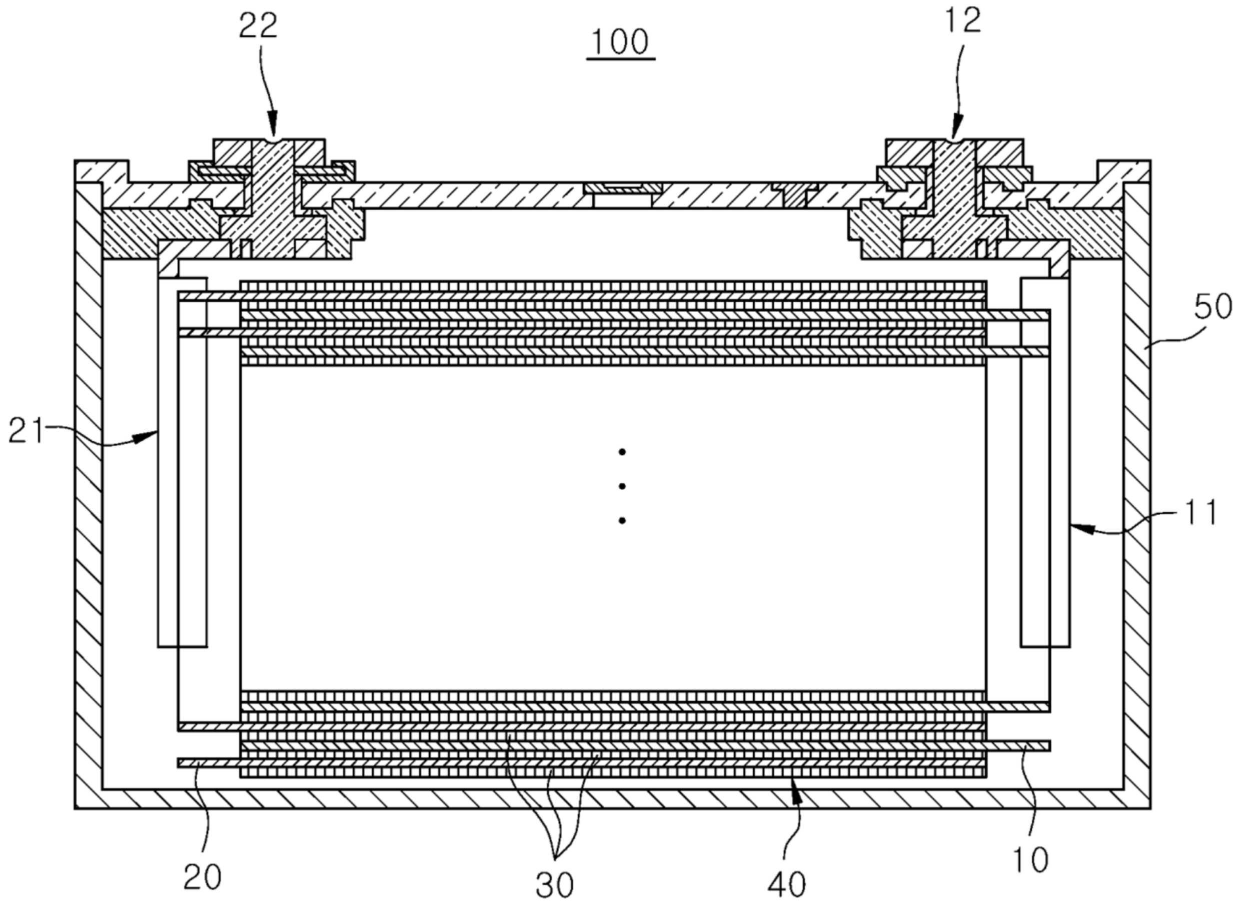

FIG 5.

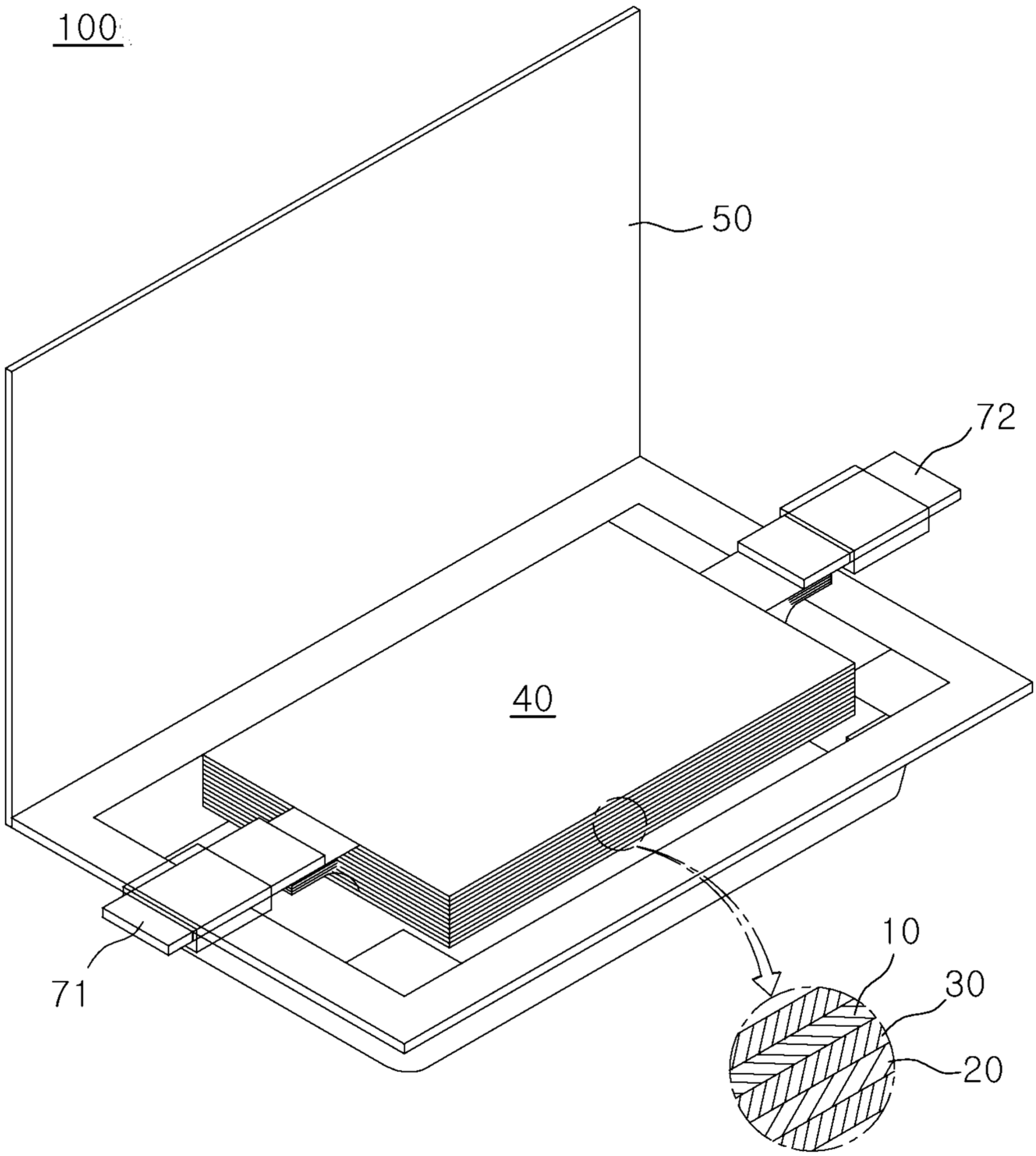

FIG 6.

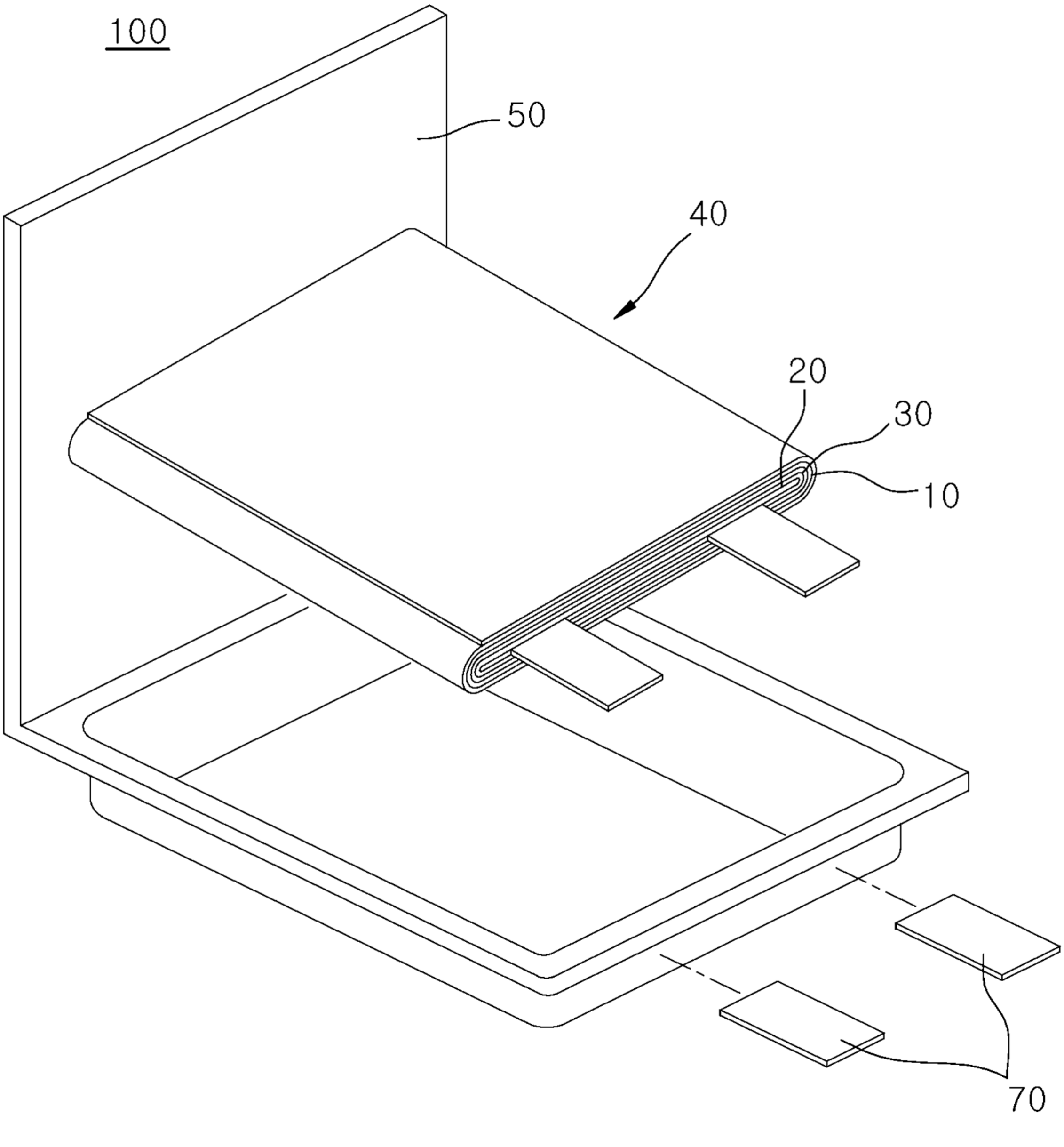

FIG 7.

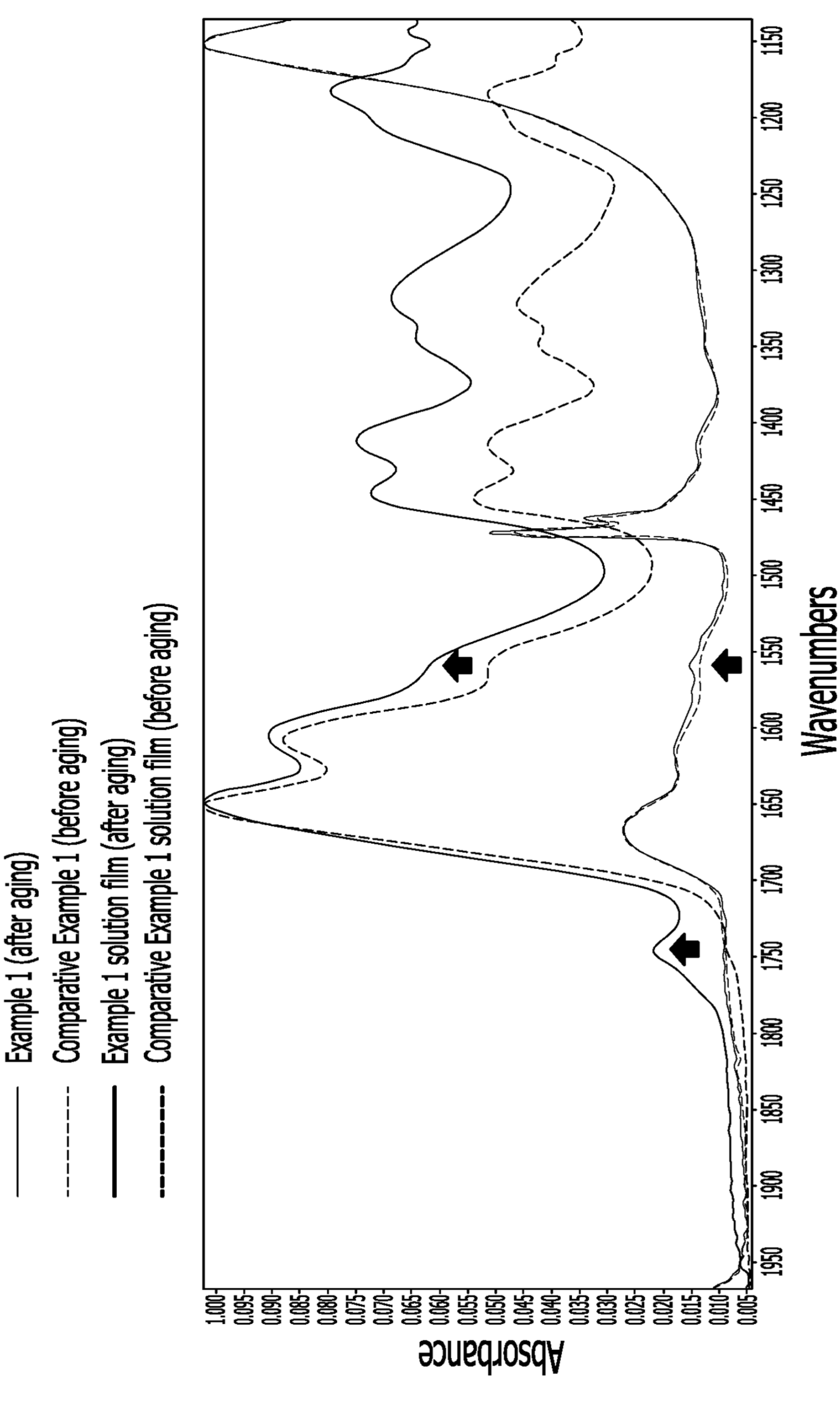
Example 1 (after aging)
Comparative Example 1 (before aging)
Example 1 solution film (after aging)
Comparative Example 1 solution film (before aging)
Absorbance
Wavenumbers
1950
1900
1850
1800
1750
1700
1650
1600
1550
1500
1450
1400
1350
1300
1250
1200
1150

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020240163675